# FASCICULE DE BREVET EUROPEEN

(11) **EP 0 740 001 B1**
(45) Date de publication et mention de la délivrance du brevet: **02.06.1999**
(21) Numéro de dépôt: 96420127.1
(22) Date de dépôt: 16.04.1996
(51) Int. Cl.: D01G 11/00

(54) **Machine effilocheuse défibreuse pour le récyclage de matières textiles**
Reiss-, Zerfaserungsmaschine für die Wiederaufbereitung von Textilmaterialien
Tearing, defibrillating machine for the recycling of textile materials

(30) Priorité: 28.04.1995 FR 9505373
(43) Date de publication de la demande: 30.10.1996
(73) Titulaire: LAROCHE SA, 69470 Cours la Ville (FR)
(72) Inventeur: Laroche, Robert, 69470 Cours la Ville (FR); Morel, André, 69470 Cours La Ville (FR)
(74) Mandataire: Vuillermoz, Bruno

(56) Documents cités:
- DE-A- 2 938 169
- FR-A- 376 706
- FR-A- 1 190 115
- FR-A- 2 283 247
- PATENT ABSTRACTS OF JAPAN vol. 12, no. 462 (C-549), 5 Décembre 1988 & JP-A-63 182418 (OHARA TEKKOSHO KK), 27 Juillet 1988,

## Description

La présente invention a trait à un perfectionnement apporté aux machines effilocheuses ou défibreuses utilisées dans l'industrie textile pour traiter des déchets textiles divers afin d'obtenir des fibres réutilisables pour la fabrication de nouveaux produits, tels que fils, feutres d'isolation, matériaux de rembourrage ...

Elle a trait plus particulièrement à une machine perfectionnée du type faisant l'objet du FR-A-2 621 329 (équivalent à EP-0 311 530 et US-A-5 031 844).

D'une manière générale, une telle machine se compose essentiellement, si l'on suit le déroulement du processus de traitement :
- d'un poste d'alimentation en déchets textiles à traiter ;
- d'au moins un module de traitement permettant d'assurer le défibrage des déchets et la formation d'une nappe fibreuse homogène à partir des fibres obtenues, ledit module de défibrage comprenant :
   . un bloc alimentaire constitué d'un rouleau entraîné en rotation, positionné en regard d'une auge ou cuvette fixe, délivrant les déchets sous la forme d'une nappe à l'ensemble de défibrage ;
   . un ensemble de défibrage comprenant un tambour à pointes, en rotation autour d'un axe horizontal, qui entraîne et déchiquette la nappe de déchets qui lui est présentée et transfère les fibres à un dispositif de nappage constitué par une bande transporteuse perforée sous laquelle on crée une aspiration ;
   . un ensemble d'évacuation de la nappe formée.

En général, pour obtenir un bon défibrage des déchets textiles et obtenir en final une nappe très homogène, il est nécessaire d'effectuer plusieurs traitements successifs. Pour ce faire, les machines industrielles sont en général constituées d'une succession de modules de traitement du type précité, des moyens étant prévus au niveau de chaque module pour récupérer les déchets insuffisamment défibrés et pour les réintroduire automatiquement dans le poste d'alimentation de la machine.

Par ailleurs, pour obtenir une bonne efficacité lors de l'opération de défibrage ainsi qu'une qualité constante du produit réalisé, il est nécessaire de procéder périodiquement à un affûtage des pointes des tambours de défibrage. Par suite, des moyens sont prévus pour permettre de réaliser une telle opération sur la machine elle-même, ces moyens pouvant être déplacés d'un module de travail au suivant.

Une telle opération d'affûtage entraîne une réduction de la longueur des pointes et par suite du rayon du cylindre formé par l'enveloppe passant par leurs extrémités.

Or il est bien connu que dans un tel type d'installation, parmi les différents paramètres qui conditionnent l'intensité et la qualité du défibrage, le plus important est celui de la distance entre l'auge ou cuvette fixe du bloc alimentaire et les pointes ou dents de scie du tambour de défibrage, distance différente d'un module au suivant et dépendant de la nature des fibres à travailler, de l'homogénéité de la nappe fibreuse au fur et à mesure de son passage à l'intérieur de la ligne de traitement et de la qualité finale du produit obtenu.

Par suite, après chaque opération d'affûtage, il est impératif de réaliser un nouveau réglage de l'ensemble de l'installation pour se retrouver dans les mêmes conditions de traitement qu'avant cette opération.

Pour ce faire, il a été envisagé, comme cela ressort du FR-A-2 421 228, qui constitue l'état de la technique le plus proche, de monter le bloc alimentaire sur un chariot mobile porté par deux glissières horizontales et orthogonales à l'axe du tambour à pointes, et qui permet de régler cette distance, la position exacte du chariot étant contrôlée par des détecteurs de proximité reliés à un dispositif central de contrôle.

Une telle solution ne donne cependant pas entière satisfaction par le fait qu'après chaque opération d'affûtage, on ne connait pas avec précision la quantité de matière enlevée à l'extrémité des pointes et par suite la valeur dont il conviendrait de déplacer le chariot pour obtenir l'écartement optimal entre lesdites pointes et le bloc alimentaire.

Or on a trouvé, et c'est ce qui fait l'objet de la présente invention, un perfectionnement apporté à un tel type d'installation qui permet d'obtenir un réglage précis, pratiquement instantané entre l'auge du bloc alimentaire et l'extrémité des pointes du tambour de défibrage, permettant ainsi de retrouver de manière simple et précise le réglage optimal de la machine.

D'une manière générale, la machine effilocheuse selon l'invention se caractérise en ce que dans chaque module de traitement, le bloc alimentaire est monté sur un support déplaçable parallèlement par rapport à l'axe du tambour à pointes, son écartement par rapport à l'extrémité de ces dernières étant déterminé en mesurant la distance entre deux éléments montés en regard l'un de l'autre, le premier monté fixe sur le bâti de la machine, le second sur le support déplaçable du bloc alimentaire, ce dernier élément étant constitué par une tige démontable qui, lors d'une opération d'affûtage des pointes, est montée sur le trajet de l'ensemble d'affûtage afin que sa longueur soit réduite de la même valeur que celle des pointes, permettant ainsi de déterminer, après remise en place sur le support déplaçable, l'amplitude du déplacement à communiquer audit support pour retrouver l'écartement optimal de travail par simple mesure de l'écart de longueur entre les deux éléments avant et après affûtage.

Dans une forme de réalisation préférentielle, la mesure et l'affichage de l'espacement entre les deux éléments de contrôle est obtenue en utilisant un capteur de distance capacitif monté fixe sur le bâti de la machine. Selon une variante, un tel capteur peut éventuellement être remplacé par un pion, la mesure étant alors effectuée par un jeu de jauges ou autre moyen manuel.

Par ailleurs, conformément à l'invention, afin d'obtenir un déplacement du support sans à coup et de manière plus précise, ledit support est monté sur le bâti de la machine par l'intermédiaire de deux vérins à vis actionnés par un arbre dont la rotation déplace ledit support dans un sens ou dans l'autre par rapport à la surface du tambour à pointes. Cet arbre peut être relié à un servo-moteur et permettre un réglage automatique à partir d'un automate programmable avec ou sans système de supervision. Le système de mesure peut éventuellement être relié à un système d'enregistrement permettant de conserver les valeurs de réglage pour chaque lot travaillé.

L'invention et les avantages qu'elle apporte sera cependant mieux comprise grâce à l'exemple de réalisation d'une machine effilocheuse conforme à l'invention illustré par les schémas annexés dans lesquels :
- la figure 1 est une vue d'ensemble, de côté d'une telle installation ;
- la figure 2 est une vue schématique, en perspective, montrant le système de réglage que comporte chaque module de traitement pour contrôler la distance entre le bloc alimentaire et l'extrémité des pointes du tambour de traitement.

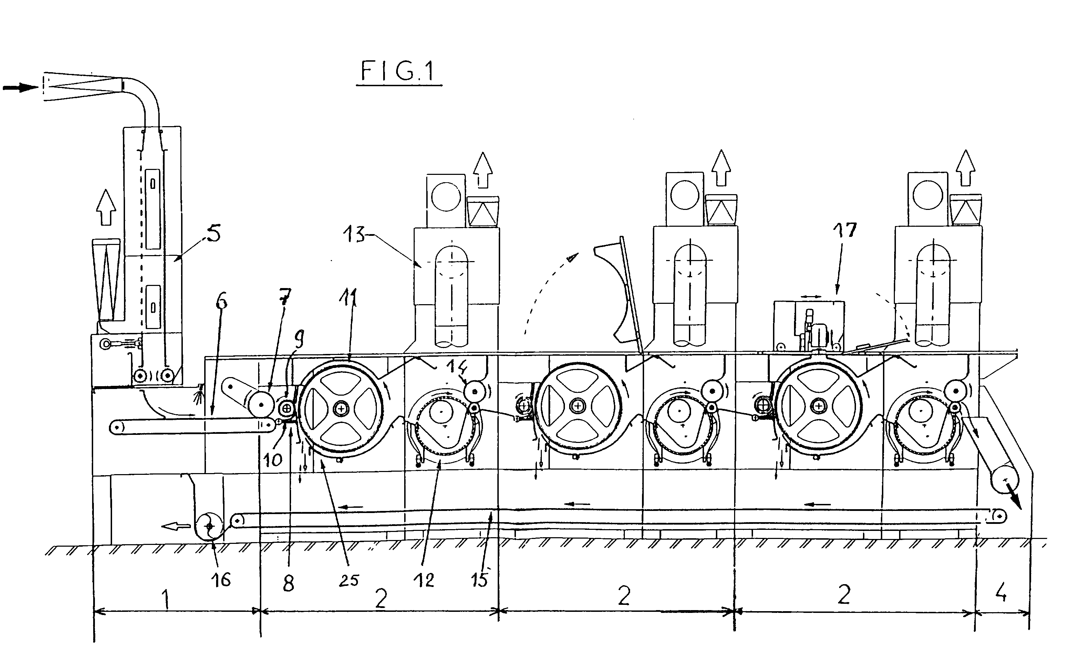

En se reportant à la figure 1, la machine selon l'invention se compose, d'une manière similaire aux enseignements du FR-A-2 621 329, si l'on suit le déroulement du processus de traitement, d'un poste d'alimentation automatique (1) en déchets textiles à traiter suivi de modules de traitement (2), identiques, au nombre de trois dans le cas présent, permettant d'assurer le défibrage des déchets et la formation d'une nappe fibreuse homogène à partir des fibres obtenues. A la sortie du dernier module (2), est disposé un ensemble (4) permettant l'évacuation de la nappe fibreuse formée à partir des fibres déchiquetées.

Le poste d'alimentation (1) est réalisé d'une manière similaire aux enseignements du brevet précité et il se compose essentiellement d'une cheminée d'alimentation (5) verticale, par le haut de laquelle sont déversés sur un tapis transporteur (6) les déchets à trier. Les déchets forment sur ce tapis (6) une nappe sensiblement uniforme sur toute la largeur de la machine et sont amenés à l'entré du premier module de traitement (2). Un cylindre presseur (7) est disposé à l'extrémité du tapis transporteur (6) et sert à comprimer et présenter de manière uniforme la nappe de déchets.

Chaque module de traitement (2) se compose essentiellement d'un bloc alimentaire (8) constitué d'un rouleau (9) entraîné en rotation, positionné en regard d'une auge ou cuvette fixe (10), de forme concave et qui est disposée au regard de l'ensemble de défibrage proprement dit. Un tel ensemble de défibrage désigné par la référence générale (3) est constitué par un tambour à pointes (11), en rotation autour d'un axe horizontal, qui entraîne et déchiquette la nappe de déchets qui lui est présentée et transfère les fibres à un dispositif de nappage (12) constitué, dans le cas présent, non pas par une bande transporteuse perforée sous laquelle on crée une aspiration comme dans le FR-A-2 621 329, mais par un cylindre perforé également soumis à une aspiration par l'intermédiaire d'un ensemble (13) et à la surface duquel les fibres provenant de la matière déchiquetée sont plaquées. La nappe portée par le cylindre nappeur (12) est reprise par un rouleau presseur (14) qui assure le transfert de la nappe au module (2) qui suit et qui est identique au précédent.

Avantageusement, dans la forme de réalisation illustrée, le cylindre nappeur (12) est monté sur un chariot permettant de l'extraire sur le côté de la machine lorsque l'on souhaite procéder à des opérations d'entretien et de nettoyage.

Entre chacun des module de traitement (2), des moyens sont prévus pour récupérer les déchets insuffisamment défibrés pour les réintroduire automatiquement dans le poste d'alimentation de la machine.

De tels moyens sont constitués essentiellement d'une tôle de récupération (25) disposée en dessous du cylindre à pointes, la matière tombant (représentée par les flèches verticales de la figure 1) sur un tapis transporteur (15) qui s'étend sur toute la longueur de la machine et en dessous de cette dernière. La réintroduction à l'intérieur du poste d'alimentation (5) de la machine est obtenue par l'intermédiaire d'une vis sans fin (16) qui transporte la matière latéralement vers un ensemble permettant de la remonter à l'entrée du poste d'alimentation de la machine.

Par ailleurs, sur la machine, est disposé un module d'affûtage (17) déplaçable au dessus de chaque module (2) qui permet, pendant l'arrêt de la machine, de procéder à l'aiguisage des pointes du tambour ouvreur (11).

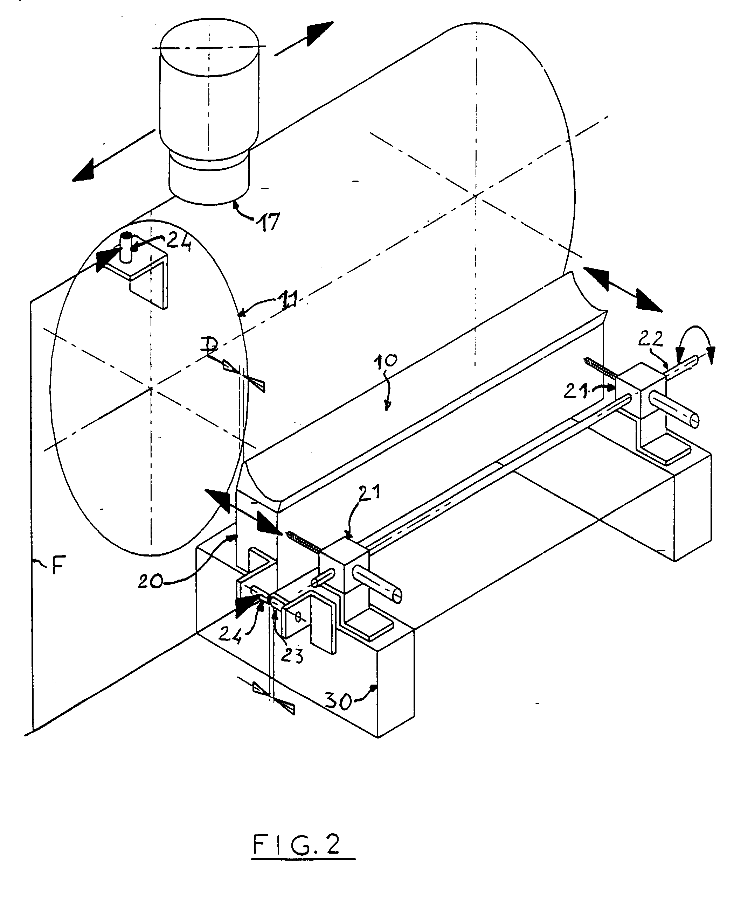

Conformément à l'invention, et ainsi que cela ressort plus particulièrement de la figure 2, chaque module de traitement comporte des moyens permettant d'effectuer le réglage de la mesure de la distance D entre l'auge d'alimentation (10) et le sommet des pointes du tambour ouvreur (11), distance qui doit être réglée avec précision pour un travail optimal. Sur cette figure, par mesure de simplification, le rouleau qui est associé à l'auge (10) du bloc alimentaire, n'a pas été représenté.

Conformément à l'invention, l'auge (10) est montée sur un support (20) qui peut coulisser sur le bâti machine (30) parallèlement par rapport à l'axe du tambour ouvreur (11). Dans la forme de réalisation illustrée, les déplacements de ce support (20) sont obtenus par l'intermédiaire de deux vérins à vis (21) actionnés par un arbre rotatif (22) qui, en fonction de son sens de rotation, permet d'avancer ou de faire reculer ledit support (20) par rapport au tambour ouvreur (11).

Le positionnement de l'auge (10) est obtenu, conformément à l'invention, en mesurant la distance entre deux éléments (23,24) montés en regard l'un de l'autre, le premier (23) monté fixe sur le bâti (30) de la machine, le second (24) étant, quant à lui, monté sur le support (20) de l'auge (10). Cet élément de contrôle (24) est constitué par une tige démontable qui, lors d'une opération d'affûtage des pointes, est montée sur le trajet de l'ensemble d'affûtage (17) afin que sa longueur soit réduite de la même valeur que celle des pointes. Les deux positions que peut prendre l'élément de contrôle (24) sont représentées à la figure 2 et sont reliées par la flèche F.

Après affûtage, l'élément (24) est remis en place sur le support déplaçable (20) et permet de déterminer l'amplitude du déplacement à communiquer audit support pour revenir au réglage optimum par simple mesure de l'écart de longueur entre les deux éléments (23,24) avant et après affûtage.

Par ailleurs, l'élément de contrôle (23) monté sur le bâti machine (30) est de préférence constitué par un capteur de distance capacitif connecté à un afficheur digital permettant de lire la cote de réglage D.

Il pourrait être envisagé de remplacer un tel capteur par un second pion, la mesure étant alors effectuée par un jeu de jauges ou autres moyens manuels.

Par rapport aux solutions antérieures, la machine conforme à l'invention présente de nombreux avantages par le fait qu'elle permet de régler de manière simple, très précise, la ou les cote(s) de réglage après chaque affûtage des pointes ou dents de scie du tambour de défibrage.

## Revendications

1. Machine effilocheuse défibreuse pour le recyclage de matières textiles du type comprenant :
- un poste d'alimentation (1) en déchets textiles à traiter;
- au moins un module de traitement (2) permettant d'assurer le défibrage des déchets et la formation d'une nappe fibreuse homogène à partir des fibres obtenues, ledit module de défibrage comprenant :
. un bloc alimentaire (8) constitué d'un rouleau(9) entraîné en rotation, positionné en regard d'une auge ou cuvette fixe (10), délivrant les déchets sous la forme d'une nappe à l'ensemble de défibrage (3);
. un ensemble de défibrage comprenant un tambour ouvreur (11), en rotation autour d'un axe horizontal, qui entraîne et déchiquette la nappe de déchets qui lui est présentée et transfère les fibres à un dispositif de nappage (12) soumis à ne source d'aspiration (13) ;
. un ensemble (4) d'évacuation de la nappe formée,
**caractérisée** en ce que dans chaque module de traitement (2), le bloc alimentaire (8) est monté sur un support (20) déplaçable parallèlement par rapport à l'axe du tambour à pointes (11), son positionnement par rapport à l'extrémité de ces dernières étant déterminé en mesurant la distance entre deux éléments (23,24) montés en regard l'un de l'autre, le premier (23) étant monté fixe sur le bâti (30) de la machine, le second (24) sur le support déplaçable (20) du bloc alimentaire (8), cet élément (24) étant constitué par une tige démontable qui, lors d'une opération d'affûtage des pointes, est montée sur le trajet de l'ensemble d'affûtage (17) afin que sa longueur soit réduite de la même valeur que celle des pointes du tambour ouvreur, permettant ainsi de déterminer, après remise en place sur le support déplaçable (20), l'amplitude du déplacement à communiquer audit support pour retrouver l'écartement optimal de travail par simple mesure de l'écart de longueur entre les deux éléments (23,24) avant et après affûtage.

2. Machine selon la revendication 1, caractérisée en ce que l'élément de mesure (23) monté fixe sur le bâti de la machine est constitué par un capteur de distance capacitif.

3. Machine selon la revendication 1, caractérisée en ce que l'élément (23) monté fixe sur le bâti de la machine est constitué par un pion, la mesure étant effectuée par un jeu de jauges.

4. Machine selon l'une des revendications 1 à 3, caractérisée en ce que le support (20) est monté sur le bâti (30) de la machine par l'intermédiaire de deux vérins à vis (21) actionnés par un arbre (22).

5. Machine selon l'une des revendications 1 à 4, caractérisée en ce que le recyclage des déchets insuffisamment défibrés entre chaque module de traitement vers le poste d'alimentation (5) de la machine, est obtenu par l'intermédiaire d'un tapis transporteur (15) qui s'étend sur toute la longueur de la machine et en dessous de cette dernière, la réintroduction à l'intérieur du poste d'alimentation (5) étant obtenu par l'intermédiaire d'une vis sans fin (16) qui transporte la matière latéralement vers un ensemble permettant de la remonter à l'entrée du poste d'alimentation de la machine.

## Patentansprüche

1. Reiß- und Zerfaserungsmaschine zur Wiederverwendung von textilen Faserstoffen, umfassend:
- eine Station (1) zur Versorgung mit zu behandelnden Textilabfällen und
- mindestens ein Behandlungsmodul (2), das die Zerfaserung der Abfälle und die Bildung eines homogenen Faservlieses aus den erhaltenen Fasern gestattet, wobei dieses Zerfaserungsmodul folgendes umfaßt:
. einen Versorgungsblock (8), der aus einer rotierenden Walze (9) besteht, die gegenüber einer feststehenden Rinne oder Schale (10) angeordnet ist, die die Abfälle in Form einer Bahn (3) einer Zerfaserungseinheit zuführt,
. der Zerfaserungseinheit mit einer um eine horizontale Achse rotierenden Öffnungswalze (11), die die ihr zugeführte Bahn von Abfällen mitnimmt und zerreißt und die Fasern einer Vliesbildemaschine (12) zuführt, auf die eine Saugquelle (13) einwirkt, und
. eine Einheit (4) zum Abführen des gebildeten Vlieses,
dadurch gekennzeichnet, daß in jedem Behandlungsmodul (2) der Versorgungsblock (8) auf einem Träger (20) montiert ist, der parallel zur Achse einer Stachelwalze (11) beweglich ist und dessen Positionierung bezüglich des Endes der Stacheln bestimmt wird, indem der Abstand zwischen zwei einander gegenüber montierten Elementen (23, 24) gemessen wird, deren erstes (23) auf dem Rahmen (30) der Maschine feststehend montiert ist und deren zweites (24) auf dem beweglichen Träger (20) des Versorgungsblocks (8) montiert ist, wobei dieses Element (24) aus einer abnehmbaren Stange besteht, die während des Schleifens der Stacheln in der Bewegungsbahn der Schleifeinheit (17) angeordnet wird, so daß ihre Länge um denselben Wert wie die Stacheln der Öffnungswalze vermindert wird, so daß nach Wiederanbringung an dem beweglichen Träger (20) die Amplitude der Bewegung, die dem Träger zu übertragen ist, um den optimalen Arbeitsabstand wieder einzunehmen, durch einfache Messung der Längenabweichung zwischen den beiden Elementen (23, 24) vor und nach dem Schleifen bestimmt werden kann.

2. Maschine nach Anspruch 1, dadurch gekennzeichnet, daß das auf dem Rahmen der Maschine feststehend montierte Meßelement (23) aus einem kapazitiven Abstandsfühler besteht.

3. Maschine nach Anspruch 1, dadurch gekennzeichnet, daß das auf dem Rahmen der Maschine feststehend montierte Element (23) aus einem Bolzen besteht, wobei die Messung mit Hilfe eines Satzes von Lehren vorgenommen wird.

4. Maschine nach einem der Ansprüche 1 bis 3, dadurch gekennzeichnet, daß der Träger (20) auf dem Rahmen (30) der Maschine über zwei durch eine Welle (22) angetriebene Schraubenwinden (21) montiert ist.

5. Maschine nach einem der Ansprüche 1 bis 4, dadurch gekennzeichnet, daß die Wiederverwertung der unzureichend zerfaserten Abfälle zwischen jedem Behandlungsmodul zur Versorgungsstation (5) der Maschine über ein Förderband (15) vorgenommen wird, das sich über die ganze Länge der Maschine und unter dieser erstreckt, wobei die Wiedereinführung in das Innere der Versorgungsstation (5) über eine Förderschnecke (16) vorgenommen wird, die das Material seitlich zu einer Einheit befördert, die es zum Eintritt der Versorgungsstation der Maschine hebt.

## Claims

1. Defibrating and tearing machine for the recycling of textile materials, of the type comprising:
- a station (1) with a feed of textile waste to be processed;
- at least one processing module (2) making it possible to ensure the defibration of the waste and the formation of a homogeneous fibrous lap from the fibres obtained, the said defibration module comprising:
. a feed unit (8) consisting of a roller (9) driven in rotation and positioned opposite a fixed trough or bowl (10) supplying the waste in the form of a lap to the defibration assembly (3);
. a defibration assembly comprising an opening drum (11), in rotation about a horizontal axis, which drives and shreds the waste lap presented to it and which transfers the fibres to a lapping device (12) subjected to a suction source (13);
. an assembly (4) for discharging the lap formed,
characterized in that, in each processing module (2), the feed unit (8) is mounted on a support (20) displaceable in parallel with the axis of the spiked drum (11), its positioning relative to the end of these spikes being determined by measuring the distance between two elements (23, 24) mounted opposite one another, the first (23) being mounted fixedly on the stand (30) of the machine and the second (24) on the displaceable support (20) of the feed unit (8), this element (24) consisting of a removable rod which, during an operation to sharpen the spikes, is mounted in the path of the sharpening assembly (17), so that the length of the said second element is reduced by the same amount as that of the spikes of the opening drum, thus making it possible, after the said second element has been put back in place on the displaceable support (20), to determine the amplitude of displacement to be imparted to the said support in order to re-establish the optimum working clearance simply by measuring the difference in length between the two elements (23, 24) before and after sharpening.

2. Machine according to Claim 1, characterized in that the measuring element (23) mounted fixedly on the stand of the machine consists of a capacitive distance sensor.

3. Machine according to Claim 1, characterized in that the element (23) mounted fixedly on the stand of the machine consists of a stud, the measurement being made by means of a set of gauges.

4. Machine according to one of Claims 1 to 3, characterized in that the support (20) is mounted on the stand (30) of the machine by means of two screw jacks (21) actuated by a shaft (22).

5. Machine according to one of Claims 1 to 4, characterized in that the recycling of the insufficiently defibrated waste between each processing module towards the feed station (5) of the machine is obtained by means of a conveyor belt (15) which extends over the entire length of the machine and below the latter, reintroduction into the feed station (5) being obtained by means of an endless screw (16) which transports the material laterally towards an assembly making it possible to raise the said material to the entrance of the feed station of the machine.
